(19) Europäisches Patentamt
European Patent Office
Office européen des brevets

(11) **EP 1 857 957 A2**

(12) **EUROPEAN PATENT APPLICATION**

(43) Date of publication:
**21.11.2007 Bulletin 2007/47**

(51) Int Cl.:
***G06F 21/00*** *(2006.01)*

(21) Application number: **07251885.5**

(22) Date of filing: **04.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **10.05.2006 JP 2006131390**

(71) Applicant: **Ricoh Company, Ltd.**
**Tokyo 143-8555 (JP)**

(72) Inventor: **Watanabe, Yoshikazu**
**Tokyo 143-8555 (JP)**

(74) Representative: **Leeming, John Gerard**
**J.A. Kemp & Co.**
**14 South Square**
**Gray's Inn**
**London WC1R 5JJ (GB)**

(54) **Electronic device and method for upgrading version thereof**

(57) An electronic device (01) of the invention includes: a memory storing a control program and/or control data which control the electronic device (01); a recording media interface (07) to which a recording media (08) storing a version upgrade file which updates the control program and/or the control data stored in the memory is connected; a controller (02) configured to perform a version upgrade of the control program and/or the control data stored in the memory by the version upgrade file stored in the recording media (08) connected to the recording media interface (07); and means (02) for detecting falsification of the version upgrade file.

# FIG.1

## Description

The present invention relates to a technology for upgrading a version of an electronic device having a memory card interface.

Conventionally, a version upgrade of a control program, control data and so forth of an electronic device provided with a memory card interface such as a digital camera, for example, is generally performed through the use of a memory card.

In such an electronic device, however, data for performing the version upgrade can easily be manipulated with a personal computer by a user. Hence, measures for protecting the data for the version upgrade have been called for.

As examples of the measures for the protection of the data utilized for the version upgrade, Japanese patent publication No. 2002-271261 discloses a technology in which an authentication procedure for a device is carried out before the version upgrade is performed. Japanese patent publication No. 2003-262340 discloses a device which determines an abnormality of a program.

However, the technology disclosed in JP2002-271261 A has a problem in that it cannot be applied to an electronic device which does not have a communication environment. A problem inherent to the technology disclosed in JP2003-262340A is that a partial falsification in the program cannot be detected.

For the foregoing reasons, there is a need for an electronic device and a version upgrading method thereof that avoids a malfunction of the device due to an error in the copying of a version upgrade file, and due to writing of an illicit program, data or the like by a malicious falsification of the version upgrade file, and so forth.

On the other hand, there is also a problem in that it takes an excess amount of time to perform the version upgrade when a process of detecting the falsification is carried out.

In particular, a problem occurs wherein an increase in costs is incurred due to the excess amount of time taken at the development stage, production stage and so on.

For the foregoing reasons, there is also a need for an electronic device and a version upgrading method thereof that performs the version upgrade efficiently and accordingly reduces the costs.

The present invention is directed to an electronic device and a method for upgrading a version thereof that satisfy this need.

To achieve these and other advantages and in accordance with the purpose of the invention, as embodied and broadly described herein, the invention provides an electronic device, which includes: a memory storing a control program and/or control data which control the electronic device; a recording media interface to which a recording media storing a version upgrade file which updates the control program and/or the control data stored in the memory is connected; a controller configured to perform a version upgrade of the control program and/or the control data stored in the memory by the version upgrade file stored in the recording media connected to the recording media interface; and means for detecting falsification of the version upgrade file.

In addition, the present invention provides a method for upgrading a version of an electronic device, the method including: storing a control program and/or control data which control the electronic device into a memory; connecting to a recording media interface a recording media storing a version upgrade file which upgrades the control program and/or the control data; upgrading the version of the control program and/or the control data by the version upgrade file; and detecting falsification of the version upgrade file before rewriting the memory.

It is to be understood that both the foregoing general description and the following detailed description are exemplary, and are intended to provide further explanation of the invention as claimed.

In the following, the present invention is explained in greater detail by means of several exemplary preferred embodiments thereof in conjunction with the accompanying drawings. Note that the accompanying drawings are included to provide a further understanding of the invention, and are incorporated in and constitute a part of this description. The drawings illustrate embodiments of the invention and, together with the description, serve to explain the principles of the invention.

FIG 1 is a structural diagram of an electronic device according to an embodiment of the present invention.

FIG. 2 illustrates a structure of a version upgrade file according to the embodiment of the present invention.

FIG. 3 illustrates another structure of a version upgrade file according to the embodiment of the present invention.

FIG. 4 illustrates yet another structure of a version upgrade file according to the embodiment of the present invention.

FIG. 5 is a flowchart of a process of detecting falsification of the version upgrade file according to the embodiment of the present invention.

FIG. 6 is a flowchart of a process of calculating a comparison verification code according to the embodiment of the present invention.

FIG. 7 is a flowchart of a process of rewriting a flash memory according to the embodiment of the present invention.

FIG. 8 is a flowchart of a process of invalidating the detection of the falsification according to the embodiment of the present invention.

Reference will now be made in detail to the present preferred embodiments of the invention, examples of which are illustrated in the accompanying drawings. Wherever possible, the same reference numbers are used in the drawings and the description to refer to the same or like parts. The scope of the present invention, however, is not limited to these embodiments. Within the scope of the present invention, any structure and material described below can be appropriately modified.

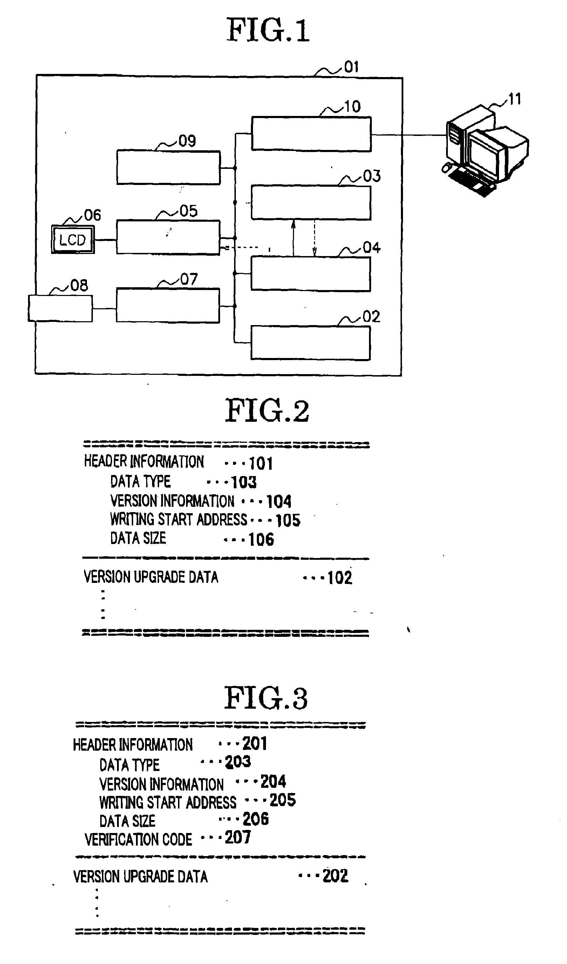

FIG. 1 schematically illustrates a structure of an electronic device and a device connected thereto according to an embodiment of the present invention.

Referring to FIG. 1, a digital camera 01, a system controller 02, an imaging section 03, an image processor 04, a display controller 05, LCD (Liquid Crystal Display) 06, a recording media interface 07, a recording media 08, a hard-key interface 09, a communication interface 10, and a personal computer 11 are illustrated.

The system controller 02 is structured of a CPU (Central Processing Unit), a flash memory, SDRAM (Synchronous Dynamic Random Access Memory), and a timer for example. The system controller 02 is provided for controlling the digital camera 01 in its entirety.

The imaging section 03 includes optical components such as lenses and lens driving motors and so forth, a CCD (Charge-Coupled Device), a CCD driving circuit, and an A/D (Analog/Digital) converter, for example, for imaging a photographic object.

The image processor 04 is provided for example with an image processing DSP (Digital Signal Processor) and RAM (Random Access Memory). The image processing DSP applies various image processes to an image signal obtained by the imaging section 03. The image processing DSP further controls the lens driving motors and timing for driving the CCD so as to carry out zooming, focusing, an exposure adjustment and so on, and compresses and decompresses a photographed image.

The display controller 05 includes a D/A (Digital/Analog) converter and an on-screen display controller for example. The display controller 05 carries out a signal process for displaying the image signal processed by the image processor 04 on the LCD 06, and generates various graphic images as a user interface to display the generated graphic images on the LCD 06.

The LCD 06 is provided for displaying the photographed image, and also the graphic images for the user interface.

The recording media interface 07 includes a memory card controller, for example, and provides an interface between the digital camera 01 and the recording media 08.

The recording media 08 stores the compressed image signal, various types of information on the image and so on, and is structured so as to be attachable to and detachable from the digital camera 01. The recording media 08 is structured of a flash memory or the like.

The hard-key interface 09 includes a sub-CPU, and detects a state of the user interface such as keys and a dial, which are unillustrated. The hard-key interface 09 also carries out a control of a main power supply for a main CPU.

The communication interface 10 is provided with a communication controller, and carries out data communication with an external device based on a USB (Universal Serial Bus) connection, for example.

The personal computer 11 is connected to the digital camera 01 with the USB connection. The personal computer 11 receives the image obtained by the digital camera 01 from the digital camera 01 so as to reproduce the transmitted image thereon, and carries out various settings on the digital camera 01.

First, photographing operations according to an embodiment of the invention will be described.

A user operates the various keys and the dial, which are unillustrated, to determine a photographing mode such as a high quality mode, a low quality mode and so on, prior to photographing.

Content of the operation by the user is determined by the system controller 02 through the hard-key interface 09. The system controller 02 generates guidance graphics according to the operation by the user and outputs the generated guidance graphics to the display controller 05 so as to prompt the user to carry out a subsequent operation.

When the photographing mode is determined, the system controller 02 sets process parameters corresponding to the determined mode to the image processor 04.

The user may also operate an unillustrated zoom lever to determine an angle of field or a composition.

The content of the operation by the user is determined by the system controller 02 through the hard-key interface 09. The system controller 02 controls the imaging section 03 and at the same time, drives the lenses in accordance with the user's operation.

The imaging section 03, according to the control of the image processor 04, initiates an imaging operation for displaying a monitoring image on the LCD 06, prior to the actual photographing.

Data obtained by the imaging section 03 are continuously sent to the image processor 04. The image processor 04 applies processes such as a color space conversion, a gamma correction, a white balance adjustment and so on to the data sent from the imaging section 03, and sends the processed image data to the image controller 05 thereafter.

At this time, simultaneously, the image processor 04 detects a focus and the exposure to control the imaging section 03 so as to adjust the focus and the exposure.

The display controller 05 processes the image data into signals and displays the processed signals of the images on the LCD 06 to present a state of the imaging or the monitoring to the user.

When an unillustrated shutter-release button is pressed, an operation of the shutter-release button pressed by the user is determined by the system controller 02 through the hard-key interface 09, as with the case of the mode setting.

The imaging section 03 obtains a predetermined image of the photographic object in accordance with the control by the image processor 04, and sends the obtained image of the photographic object to the image processor 04. The image processor 04 carries out the image processes according to the determined photographing mode and the compression process.

The system controller 02 retrieves the compressed image data, attaches header information to the retrieved compressed image data, and then writes the compressed image data, to which the header information is attached, into the recording media 08 through the recording media interface 07.

Thereby, the series of photographing operations completes.

Next, operations of a version upgrade according to the embodiment of the invention will be described. Here, the "Caplio R3 firmware upgrade procedure for Windows" (trademark), which can be obtained from the following website, may be referred to for operational procedures of the version upgrade:

http://www.ricoh.com/r_ dc/download/firmware/r3/procedure_win.html

A version upgrade file for the version upgrade of the digital camera 01 is previously stored in the recording media 08 through a copying operation by the use of the personal computer 11, via the USB communication and so on.

FIG 2 illustrates a structure of the version upgrade file according to the embodiment of the present invention.

Referring to FIG 2, header information 101, version upgrade data 102, data type 103, version information 104, a writing start address 105, and data size 106 are illustrated.

The header information 101 includes various types of information on the later-described version upgrade file. The version upgrade data 102 includes a binary image to be written into a flash memory for example.

The data type 103, which is one byte, for example, is used to determine a type of the version upgrade data 102. The type of the version upgrade data 102 may be determined, for example, by:

0x00: program/0x01: adjustment value data

The version information 104 is used to determine a version of the version upgrade file, and includes a BCD (Binary Coded Decimal) code having one byte for an integer portion and one byte for a fractional part. The writing start address 105 has four bytes, for example, and includes a top address for the flash memory to which the version upgrade data 102 is to be written. The data size 106 includes four bytes for example and indicates a size of the version upgrade data 102.

The header information 101 is used for setting of the version upgrade operations at the time of performing the version upgrade. The header information 101 is written into a predetermined area within the flash memory, as a current program and management information for an adjustment value after the version upgrade.

When a predetermined operation for the version upgrade is carried out, the system controller 02 loads the header information 101 of the version upgrade file, and first determines the data type 103.

The system controller 02 determines the following according to the data type 103:

1) whether or not the version information 104 is newer than a version currently written in the flash memory (a predetermined area of the flash memory is referred to for the current version);

2) whether or not the writing start address 105 is within a range of an address previously determined according to the data type (the address range is decided and programmed according to every data type); and

3) whether or not the data size 106 is within a range of a data size previously determined according to the data type (the range of the data size is decided and programmed according to every data type).

In a case in which at least one of the above criteria is not satisfied, the version upgrade is cancelled, and a message indicating that the version upgrade is cancelled is displayed on the LCD 06.

When confirmation of the header is completed, the system controller 02 loads the version upgrade data 102 for each unit of rewriting of the flash memory determined according to a specification of the flash memory, and rewrites the flash memory.

When all of the rewriting is completed, the header information is written or rewritten into the predetermined area within the flash memory as described above.

Here, a program for executing the rewriting is copied from the flash memory to the SDRAM at the time of activation of the digital camera 01, and the CPU executes a program code from the SDRAM.

Now, detection of falsification of the version upgrade file according to the embodiment of the invention will be described.

FIG 3 illustrates a structure of another version upgrade file according to the embodiment of the present invention.

Referring to FIG. 3, header information 201, version upgrade data 202, data type 203, version information 204, a writing start address 205 and data size 206, which are similar to those of 101-106 described above, respectively, are illustrated.

FIG 3 also illustrates a verification code 207 having twenty bytes for example.

According to the present embodiment, the verification code 207 is generated at the time when the version upgrade file is created, and is added to the version upgrade tile.

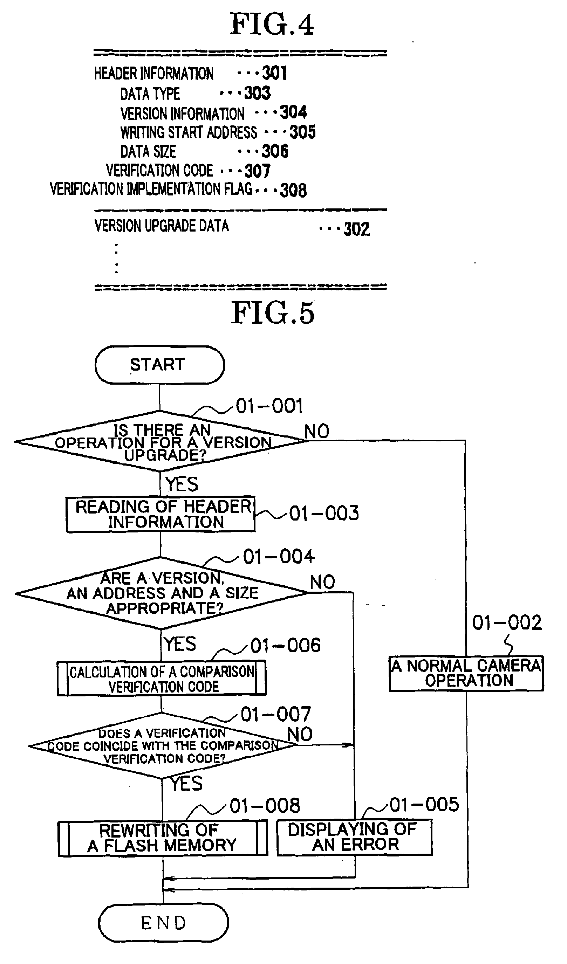

FIG 5 is a flowchart of a process of detecting the falsification of the version upgrade file according to the embodiment of the present invention. In the process flowchart illustrated in FIG. 5, when the power of the digital camera 01 is turned on and the operation for the version upgrade is detected (Step 01-001), the system controller 02 reads the header information 201 (Step 01-003), and determines the version information 204, the writing start address 205 and the data size 206 according to the data type 203 (Step 01-004).

A normal operation of the digital camera 01 is activated when there is no version upgrade operation (Step 01-002). An error is displayed on the LCD 06 when a problem is found for any one of the version information 204, the writing start address 205 and the data size 206 (Step 01-005), and the process is ended.

Next, the system controller 02 calculates a comparison verification code for detecting the falsification (Step 01-006).

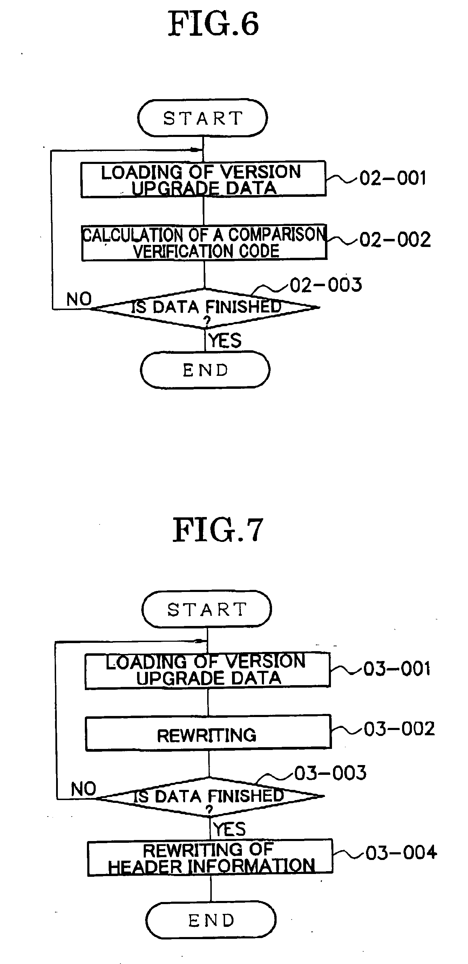

FIG. 6 is a flowchart of a process of calculating the comparison verification code according to the embodiment of the present invention.

In the present embodiment, the system controller 02 loads the version upgrade data 202 for each predetermined size (Step 02-001), and calculates the comparison verification code from loaded data of the version upgrade data 202 (Step 02-002). The operation of Steps 02-001 and 02-002 is repeated until the version upgrade data 202 finishes (Step 02-003).

Here, the predetermined size utilized for the loading of the version upgrade data 202 may have a size the same as that used for loading of the version upgrade data 202 for rewriting, which is described later (Step 03-001), or may have a size different from that therefor. In other words, it is preferable that a predetermined size that is efficient for implementation be selected.

The calculation of the comparison verification may be performed based on one of the following methods of:

1) obtaining a hash value of the version upgrade data 102 from a predetermined hash function such as SHA1 (Secure Hash Algorithm 1), for example;

2) generating a signature code by using a key data including twenty bytes, for example, previously embedded in the digital camera 01 as a unique code of a model of the digital camera 01, on the basis of a predetermined signature algorithm such as HMAC-SHA1 (keyed-Hashing for Massage Authentication Code-Secure Hash Algorithm 1), for example;

3) calculating a bytesum value; and

4) obtaining a sum value from the following formula, wherein, a value in which data of every one byte is shifted by each address thereof is added to the sum value:

$$SUM = SUM + DATA << (ADDRESS \% 13)$$

One of these methods is previously selected for the operation. Note that the verification code 207 within the version upgrade file is also generated by the same method as the generation method of the comparison verification code, and is added to the version upgrade file.

Turning back to the process flowchart of FIG 5, the system controller 02 compares the verification code 207 in the header with the comparison verification code calculated according to the flow of FIG. 6 (Step 01-007). The system controller 02 rewrites the flash memory with the version upgrade file when the verification code 207 and the comparison verification code coincide with each other (Step 01-008). The system controller 02 displays an error on the LCD 06 when the verification code 207 and the comparison verification code do not coincide with each other (Step 01-005), and ends the process.

FIG. 7 is a flowchart of a process of rewriting the flash memory according to the embodiment of the present invention. The system controller 02 loads the version upgrade data 202 for each unit of rewriting of the flash memory (Step 03-001), and rewrites the flash memory with the loaded data of the version upgrade data 202 (Step 03-002).

The operation of Steps 03-001 and 03-002 is repeated until the version upgrade data 202 finishes (Step 03-003), and the predetermined area in the flash memory is rewritten with the header information 201 (Step 03-004).

Thereby, a series of operations including the detection of the falsification is completed.

Now, invalidation of the detection of the falsification according to the embodiment of the invention will be described.

FIG 4 illustrates yet another version upgrade file according to the embodiment of the present invention.

Referring to FIG 4, header information 301, version upgrade data 302, data type 303, version information 304, a writing start address 305, data size 306, and a verification code 307, which are similar to those 201-207 described above, respectively, are illustrated.

FIG. 4 also illustrates a verification implementation flag 308 which determines whether the verification described above is to be implemented or not. In the present embodiment, the verification implementation flag 308 has one byte, and whether to implement the verification is determined by the verification implementation flag 308, for example, based on:

0x00: not implemented/0×01: implemented

The verification implementation flag 308 is generated at the time when the version upgrade file is created. In the present embodiment, a value of 0x01 is added to the verification implementation flag 308.

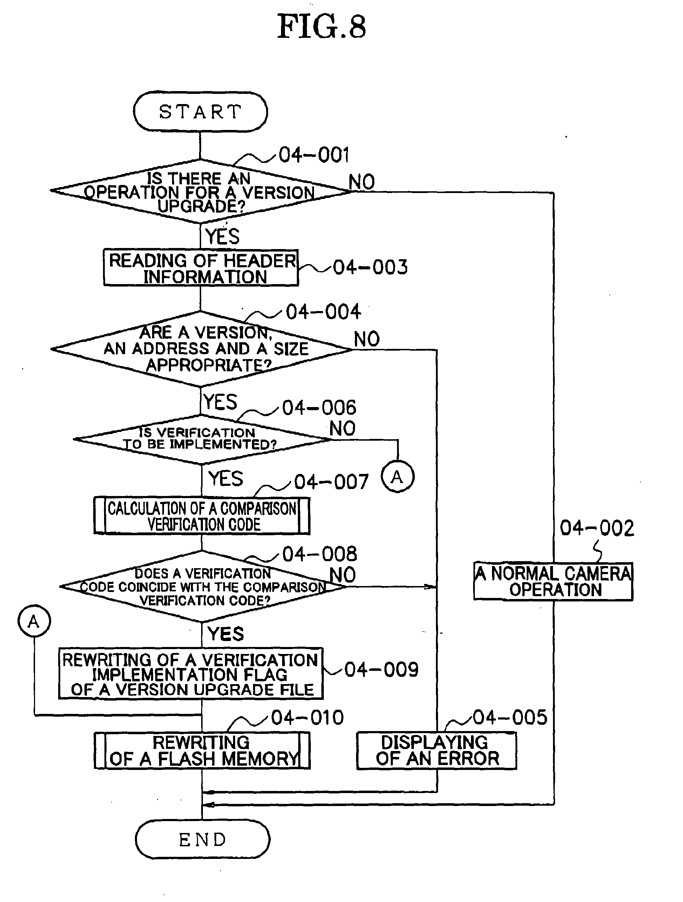

FIG. 8 is a flowchart of a process of invalidating the falsification detection according to the embodiment of the present invention. In the process flowchart illustrated in FIG. 8, when the power of the digital camera 01 is turned on and the operation of the version upgrade is detected (Step 04-001), the system controller 02 reads the header information 301 (Step 04-003), and determines the version information 304, the writing start address 305 and the data size 306 according to the data type 303 (Step 04-004).

The normal operation of the digital camera 01 is activated when there is no version upgrade operation (Step 04-002). The error is displayed on the LCD 06 when a problem is found for any one of the version information 304, the writing start address 305 and the data size 306 (Step 04-005), and the process is ended.

Next, the system controller 02 determines whether or not the verification is to be implemented from the verification implementation flag 308 (Step 04-006). When the verification is to be implemented (i.e., 0x01 is set for example), the system controller 02 executes the calculation of the comparison verification code described above with reference to FIG. 6 (Step 04-007) and the comparison between the verification code and the comparison verification code (Step 04-008). When the verification code and the comparison verification code coincide with each other, the system controller 02 rewrites the verification implementation flag 308 in the version upgrade file from 0x01 (implemented) to 0x00 (not implemented) (Step 04-009),

Therefore, since the system controller 02 rewrites the verification implementation flag 308 such that the verification is not carried out after the comparison between the verification code and the comparison verification code is carried out, the verification operation is omitted when the version upgrade file, which has been once verified, is used for a version upgrade of another camera. Hence, the version upgrade for the other camera is completed promptly.

Since operations other than the invalidation of the falsification detection are the same or similar to those described above, they will not be described in detail.

In the present embodiment, the verification implementation flag 308 is set separately from the verification code to determine whether or not to implement the verification. In one embodiment, a particular verification code including zero and non-zero is utilized to determine with or without the verification.

Also, in the present embodiment, the verification implementation flag 308 in the version upgrade file is rewritten when the verification code coincides with the comparison verification code as a result of the verification. In one embodiment, a file indicating that the verification has been carried out is generated separately from the version upgrade file.

Therefore, according to the present embodiment of the invention, it is constituted such that the falsification of the version upgrade file is detected. Hence, it is possible to avoid a malfunction of a device due to an error in copying of a version upgrade file, and due to writing of an illicit program, data or the like by a malicious falsification of the version upgrade file, and so forth.

Also, the detection of the falsification is performed based on the hash value. Hence, it is possible to detect the falsification of the version upgrade file even when the falsification is minimal.

The detection of the falsification may also be performed based on the signature code. Hence, it is possible to perform the falsification detection with high secrecy; i.e., it is possible to detect the falsification even when a type of detection of the falsification is leaked or analyzed.

The detection of the falsification may also be performed based on the sum value. Hence, it is possible to perform the falsification detection without largely increasing a processing load of the device; i.e., it is possible to perform the falsification detection in a device having a low processing performance.

Moreover, the falsification detection based on the sum value to which arrangement information or the address information is added may be carried out. Hence, it is possible to further ensure the falsification detection without largely increasing the processing load of the device; i.e., it is possible to perform the falsification detection in a device having a low processing performance.

The invalidation of the falsification detection is made possible by the information stored in the memory card. Hence, it is possible to perform the version upgrade at the development stage, production stage and so on efficiently, and accordingly, reduction of costs is possible.

In addition, the invalidation of the falsification detection is performed based on the information in the version upgrade file. Hence, it is possible to perform operation of the version upgrade in a similar way to a conventional procedure; i.e., it is unnecessary to handle the invalidation information in the version upgrade file by taking extra care with the invalidation information. Accordingly, the costs are reduced.

The invalidation information is written back to the memory card according to the result of the detection of the falsification. Hence, it is possible to automatically confirm the falsification due to the copying error, for example, only at the time of the initial version upgrade. Accordingly, it is possible to ensure the reliability of the version upgrade operation while reducing the costs.

Furthermore, it is possible to provide version upgrade means suitable for the digital camera.

Accordingly, it is possible to achieve the following (1) to (20) from the above-described exemplary embodiment of the present invention.

(1) An electronic device, including:

a memory storing a control program and/or control data which control the electronic device;
a recording media interface to which a recording media storing a version upgrade file which updates the control program and/or the control data stored in the memory is connected;
a controller configured to perform a version upgrade of the control program and/or the control data stored in the memory by the version upgrade file stored in the recording media connected to the recording media interface; and
means for detecting falsification of the version upgrade file.

(2) An electronic device according to (1), wherein the controller and the means for detecting the falsification are provided integrally.

(3) An electronic device according to (1) or (2), wherein the means is configured to detect the falsification of the version upgrade file by using a hash value obtained by a hash function from the control program and/or the control data in the version upgrade file.

(4) An electronic device according to (1) or (2), wherein the means is configured to detect the falsification of the version upgrade file by using a signature code which utilizes a code unique to a model of the electronic device as a key.

(5) An electronic device according to (1) or (2), wherein the means is configured to detect the falsification of the version upgrade file by using a sum value of the control program and/or the control data in the version upgrade file.

(6) An electronic device according to (5), wherein the sum value is generated by adding arrangement information or address information of the control program and/or the control data to the sum value.

(7) An electronic device according to any one of (1) to (6), further including means for invalidating the detection of the falsification of the version upgrade file according to information stored in the recording media.

(8) An electronic device according to (1) or (2), wherein the means for invalidating is provided integrally with the controller.

(9) An electronic device according to (7) or (8), wherein the means for invalidating is configured to invalidate the detection of the falsification of the version upgrade file according to information in the version upgrade file.

(10) An electronic device according to any one of (7) to (9), further including means for writing information on the invalidation of the detection of the falsification of the version upgrade file to the recording media, according to a result of the detection of the falsification of the version upgrade file.

(11) An electronic device according to any one of (1) to (10), wherein the electronic device includes a digital camera.

(12) A method for upgrading a version of an electronic device, the method including:

storing a control program and/or control data which control the electronic device into a memory;
connecting to a recording media interface a recording media storing a version upgrade file which upgrades the control program and/or the control data;
upgrading the version of the control program and/or the control data by the version upgrade file; and
detecting falsification of the version upgrade file before rewriting the memory.

(13) A version upgrading method according to (12), wherein the detecting of the falsification of the version upgrade file is carried out by using a hash value obtained by a hash function from the control program and/or the control data in the version upgrade file.

(14) A version upgrading method according to (12), wherein the detecting of the falsification of the version upgrade file is carried out by using a signature code which utilizes a code unique to a model of the electronic device as a key.

(15) A version upgrading method according to (12), wherein the detecting of the falsification of the version upgrade file is carried out by using a sum value of the control program and/or the control data in the version upgrade file.

(16) A version upgrading method according to (15), wherein the sum value is generated by adding arrangement information or address information of the control program and/or the control data to the sum value.

(17) A version upgrading method according to any one of (12) to (16), further including invalidating the detecting of the falsification of the version upgrade file according to information stored in the recording media.

(18) A version upgrading method according to (17), wherein the invalidating is configured to invalidate the detecting of the falsification of the version upgrade file according to information in the version upgrade file.

(19) A version upgrading method according to (17) or (18), further including writing information on the invalidating of the detecting of the falsification of the version upgrade file to the recording media according to a result of the detecting of the falsification of the version upgrade file.

(20) A version upgrading method according to any one of (12) to (19), wherein the electronic device includes a digital camera.

Although the present invention has been described in terms of exemplary embodiments, it is not limited thereto. It should be appreciated that variations may be made in the embodiments described by persons skilled in the art without departing from the scope of the present invention as defined by the following claims. The limitations in the claims are to be interpreted broadly based on the language employed in the claims and not limited to examples described in the present specification or during the prosecution of the application, and the examples are to be construed as non-exclusive. For example, in the present disclosure, the term "preferably", "preferred" or the like is non-exclusive and means "preferably", but not limited to.
The present application is based on and claims priority from Japanese Patent Application Serial Number 2006-131390, filed May 10, 2006, the disclosure of which is hereby incorporated by reference herein in its entirety.

**Claims**

1. An electronic device (01), comprising:

   a memory storing a control program and/or control data which control the electronic device (01);
   a recording media interface (07) to which a recording media (08) storing a version upgrade file which updates the control program and/or the control data stored in the memory is connected;
   a controller (02) configured to perform a version upgrade of the control program and/or the control data stored in the memory by the version upgrade file stored in the recording media (08) connected to the recording media interface (07); and
   means (02) for detecting falsification of the version upgrade file.

2. An electronic device (01) according to Claim 1, wherein the controller (02) and the means (02) for detecting the falsification are provided integrally.

3. An electronic device (01) according to Claim 1 or 2, wherein the means (02) is configured to detect the falsification of the version upgrade file by using a hash value obtained by a hash function from the control program and/or the control data in the version upgrade file.

4. An electronic device (01) according to Claim 1 or 2, wherein the means (02) is configured to detect the falsification of the version upgrade file by using a signature code which utilizes a code unique to a model of the electronic device (01) as a key.

5. An electronic device (01) according to Claim 1 or 2, wherein the means (02) is configured to detect the falsification of the version upgrade file by using a sum value of the control program and/or the control data in the version upgrade file.

6. An electronic device (01) according to Claim 5, wherein the sum value is generated by adding arrangement information or address information of the control program and/or the control data to the sum value.

7. An electronic device (01) according to any one of Claims 1 to 6, further comprising means (2) for invalidating the detection of the falsification of the version upgrade file according to information stored in the recording media.

8. An electronic device (01) according to Claim 1 or 2, wherein the means (02) for invalidating is provided integrally with the controller (02).

9. An electronic device (01) according to Claim 7 or 8, wherein the means (02) for invalidating is configured to invalidate the detection of the falsification of the version upgrade file according to information in the version upgrade file.

10. An electronic device (01) according to any one of Claims 7 to 9, further comprising means (02) for writing information on the invalidation of the detection of the falsification of the version upgrade file to the recording media, according to a result of the detection of the falsification of the version upgrade file.

11. An electronic device (01) according to any one of Claims 1 to 10, wherein the electronic device (01) includes a digital camera (01).

12. A method for upgrading a version of an electronic device (01), the method comprising:

    storing a control program and/or control data which control the electronic device (01) into a memory;
    connecting to a recording media interface (07) a recording media (08) storing a version upgrade file which upgrades the control program and/or the control data;
    upgrading the version of the control program and/or the control data by the version upgrade file; and
    detecting falsification of the version upgrade file before rewriting the memory.

13. A version upgrading method according to Claim 12, wherein the detecting of the falsification of the version upgrade file is carried out by using a hash value obtained by a hash function from the control program and/or the control data in the version upgrade file.

14. A version upgrading method according to Claim 12, wherein the detecting of the falsification of the version upgrade file is carried out by using a signature code which utilizes a code unique to a model of the electronic device (01) as a key.

15. A version upgrading method according to Claim 12, wherein the detecting of the falsification of the version upgrade file is carried out by using a sum value of the control program and/or the control data in the version upgrade file.

16. A version upgrading method according to Claim 15, wherein the sum value is generated by adding arrangement information or address information of the control program and/or the control data to the sum value.

17. A version upgrading method according to any one of Claims 12 to 16, further comprising invalidating the detecting of the falsification of the version upgrade file according to information stored in the recording media.

18. A version upgrading method according to Claim 17, wherein the invalidating is configured to invalidate the detecting of the falsification of the version upgrade file according to information in the version upgrade file.

19. A version upgrading method according to Claim 17 or 18, further comprising writing information on the invalidating of the detecting of the falsification of the version upgrade file to the recording media according to a result of the detecting of the falsification of the version upgrade file.

20. A version upgrading method according to any one of Claims 12 to 19, wherein the electronic device (01) includes a digital camera (01).

# FIG.1

# FIG.2

```
===================================
HEADER INFORMATION    ···101
    DATA TYPE      ···103
    VERSION INFORMATION ···104
    WRITING START ADDRESS···105
    DATA SIZE        ···106
_____
VERSION UPGRADE DATA          ···102
    :
    :
    :
===================================
```

# FIG.3

```
===================================
HEADER INFORMATION   ···201
    DATA TYPE      ···203
    VERSION INFORMATION ···204
    WRITING START ADDRESS ···205
    DATA SIZE       ···206
    VERIFICATION CODE ···207
_____
VERSION UPGRADE DATA          ···202
    :
    :
    :
===================================
```

11

## FIG.4

```
═══════════════════════════════════════════
HEADER INFORMATION    ···301
    DATA TYPE       ···303
    VERSION INFORMATION  ···304
    WRITING START ADDRESS  ···305
    DATA SIZE         ···306
    VERIFICATION CODE  ···307
VERIFICATION IMPLEMENTATION FLAG···308
───────────────────────────────────────────

VERSION UPGRADE DATA              ···302
    :
    :
    :
═══════════════════════════════════════════
```

## FIG.5

START

01-001
IS THERE AN OPERATION FOR A VERSION UPGRADE?  NO

YES

READING OF HEADER INFORMATION  ∼01-003

01-004
ARE A VERSION, AN ADDRESS AND A SIZE APPROPRIATE?  NO

YES    01-006
CALCULATION OF A COMPARISON VERIFICATION CODE

01-007
DOES A VERIFICATION CODE COINCIDE WITH THE COMPARISON VERIFICATION CODE?  NO

YES

01-008
REWRITING OF A FLASH MEMORY

01-005
DISPLAYING OF AN ERROR

01-002
A NORMAL CAMERA OPERATION

END

# FIG.6

# FIG.7

# FIG.8

```
                    START
                       │
                       │      04-001
          ┌────────────────────────────┐
          │   IS THERE AN               │ NO
        ◁─│  OPERATION FOR A VERSION    │────────────┐
          │      UPGRADE?               │            │
          └────────────────────────────┘            │
                       │ YES                         │
          ┌─────────────────────────┐                │
          │  READING OF HEADER       │  04-003       │
          │    INFORMATION           │               │
          └─────────────────────────┘                │
                       │      04-004                  │
          ┌────────────────────────────┐             │
          │   ARE A VERSION,            │ NO          │
          │  AN ADDRESS AND A SIZE      │───────────┐ │
          │    APPROPRIATE?             │           │ │
          └────────────────────────────┘           │ │
                       │ YES    04-006              │ │
          ┌────────────────────────────┐ NO         │ │
          │   IS VERIFICATION           │──────┐     │ │
          │  TO BE IMPLEMENTED?         │      │     │ │
          └────────────────────────────┘      │     │ │
                       │ YES   04-007   (A)    │     │ │
          ┌─────────────────────────┐          │     │ │
          │ CALCULATION OF A COMPARISON│        │     │ │
          │   VERIFICATION CODE       │         │     │ │
          └─────────────────────────┘          │     │ │
                       │      04-008            │  04-002
          ┌────────────────────────────┐       │     │
          │  DOES A VERIFICATION        │ NO    │   ┌──────────────────┐
          │ CODE COINCIDE WITH THE COMPARISON│──────│ A NORMAL CAMERA  │
    (A)   │   VERIFICATION CODE?        │       │   │   OPERATION      │
          └────────────────────────────┘       │   └──────────────────┘
                       │ YES                    │
          ┌─────────────────────────────┐       │
          │ REWRITING OF A VERIFICATION  │ 04-009│
          │  IMPLEMENTATION FLAG         │       │
          │ OF A VERSION UPGRADE FILE    │       │
          └─────────────────────────────┘       │
                       │      04-010             │  04-005
          ┌─────────────────────┐        ┌──────────────────┐
          │   REWRITING          │        │  DISPLAYING      │
          │ OF A FLASH MEMORY    │        │  OF AN ERROR     │
          └─────────────────────┘        └──────────────────┘
                       │
                    END
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002271261 A
- JP 2003262340 A
- JP 2006131390 A